(19) Europäisches Patentamt
European Patent Office
Office européen des brevets

(11) **EP 4 539 176 A1**

(12) **EUROPEAN PATENT APPLICATION**

(43) Date of publication:
**16.04.2025 Bulletin 2025/16**

(21) Application number: **24178488.3**

(22) Date of filing: **28.05.2024**

(51) International Patent Classification (IPC):
**H01M 8/04089** (2016.01)  **H01M 8/04119** (2016.01)
**H01M 8/0438** (2016.01)  **H01M 8/04746** (2016.01)
**H01M 8/04791** (2016.01)  **H01M 8/04992** (2016.01)

(52) Cooperative Patent Classification (CPC):
**H01M 8/04097; H01M 8/04104; H01M 8/04156;
H01M 8/04388; H01M 8/04402; H01M 8/04753;
H01M 8/04791; H01M 8/04992;** H01M 2250/20;
Y02E 60/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.10.2023 CN 202311304318**

(71) Applicants:
• **Shanghai XCMG Intelligent Technology Co., Ltd.**
**Shanghai 200063 (CN)**

• **Jiangsu XCMG Construction Machinery
Research Institute Ltd.
Xuzhou, Jiangsu 221004 (CN)**

(72) Inventors:
• **WANG, Jia
Shanghai, 200063 (CN)**
• **GAO, Yunfeng
Shanghai, 200063 (CN)**
• **XUE, Qiong
Shanghai, 200063 (CN)**

(74) Representative: **Proi World Intellectual Property
GmbH
Obermattweg 12
6052 Hergiswil, Kanton Nidwalden (CH)**

(54) **HYDROGEN CIRCULATION SYSTEM FOR HIGH-POWER FUEL CELLS AND NITROGEN DISCHARGE CONTROL METHOD**

(57) Disclosed are a hydrogen circulation system for high-power fuel cells and a nitrogen discharge control method. The hydrogen circulation system comprises a hydrogen source, proportional valves, ejectors, a cell stack, a water separator assembly and a hydrogen circulation pump. One end of a first proportional valve, one end of a second proportional valve and one end of a third proportional valve are all connected to an outlet of the hydrogen source. The other end of the first proportional valve and the other end of the second proportional valve are respectively connected to a high-pressure inlet of a first ejector and a high-pressure inlet of a second ejector. An outlet of a mixing cavity of the first ejector and an outlet of a mixing cavity of the second ejector are both connected to an anode inlet of the cell stack. A low-pressure inlet of the first ejector and a low-pressure inlet of the second ejector are both connected to the other end of the third proportional valve, an outlet of the hydrogen circulation pump and one end of a fourth proportional valve. The other end of the fourth proportional valve and an inlet of the hydrogen circulation pump are both connected to a gas outlet of the water separator assembly. An inlet of the water separator assembly is connected to an anode outlet of the cell stack. The water separator assembly comprises a nitrogen discharge port and a drain port. The invention can satisfy anode reflux requirements in various working conditions and can realize multiple working modes, thus being high in reliability and robustness.

FIG. 1

**Description**

BACKGROUND OF THE INVENTION

1. Technical Field

The invention relates to a hydrogen circulation system for high-power fuel cells and a nitrogen discharge control method, and belongs to the technical field of fuel cells.

2. Description of Related Art

Hydrogen fuel cells are widely applied to the traffic field and has a broad prospect particularly in subdivided commercial vehicle scenarios. The hydrogen fuel cell generates electric energy, heat energy and water by means of electrochemical reactions carried out in a cell stack of the fuel cell with air and hydrogen as reactant gases. An air supply system, a cooling system and a hydrogen supply system are three sub-systems that guarantee the operation condition and stable operation of fuel cells. Wherein, the hydrogen supply system provides hydrogen at a stable pressure and often adopts a circulation scheme to pressurize hydrogen, that is not fully reacted, by means of a circulation device, and the pressurized hydrogen is then mixed with supplied hydrogen to be transported to the cell stack to participate in reaction. The anode circulation scheme improves the economy of fuel cells and guarantees the gas supply to the cell stack and the consistency in performance of the fuel cells. Moreover, the anode circulation of fuel cells has a wide range in all working conditions and can give a response quickly, so a suitable anode circulation scheme can be designed particularly for high-power fuel cells of commercial vehicles and is of great importance for reliable operation of a fuel cell system.

Existing anode circulation techniques for fuel cells mainly include the scheme of a single circulation pump, the scheme of a single ejector, and the scheme of series or parallel connection of one circulation pump and one ejector. The scheme of a single circulation pump has the advantages of high robustness and flexible control, and has the disadvantages of high cost, large size, loud noise and high parasitic power. The scheme of a single ejector (including two ejectors connected in parallel) has the advantages of no parasitic power, good stability, small size, no noise and low cost, and has the disadvantages being poor in robustness, uncontrollable, slow in response and suitable for limited working conditions. As for the scheme of series connection of one circulation pump and one ejector, the circulation pump needs satisfy both the maximum reflux requirement and the minimum reflux requirement, leading to a high part cost; the circulation pump needs to operate all the time, leading to a short service life; and in case of a failure of the circulation pump or a proportional valve, circulating gas will not be supplied, leading to low robustness. As for the scheme of parallel connection of one circulation pump and one ejector, the ejector works at rated working points, thus being unable to satisfy the requirement for frequent load change; for 200 kW or higher-power fuel cell systems, the ejector cannot satisfy the anode reflux requirement under medium and high current densities; and in case of a failure of the circulation pump or a proportional valve, circulating gas will not be supplied, leading to low robustness.

Moreover, the anode reflux is of great importance for anode circulation of fuel cells. If the anode reflux is inadequate, the excess coefficient of hydrogen entering the cell stack will be sufficient, partial hydrogen shortages and flooding of the anode of the cell stack will be caused, and an excessively low voltage of each cell or even reverse breakdown will be caused, thus severely affecting operation of fuel cells.

BRIEF SUMMARY OF THE INVENTION

An objective of the invention is to overcome the defects in the prior art by providing a hydrogen circulation system for high-power fuel cells and a nitrogen discharge control method to solve the technical problems that existing technical schemes have a single working mode and cannot satisfy the requirements of different working conditions and normal operation of fuel cells is affected due to the inadequate anode flux.

To fulfill the above objective, the invention is implemented by the following technical solution:

In a first aspect, the invention provides a hydrogen circulation system for high-power fuel cells, comprising a hydrogen source, a first proportional valve, a second proportional valve, a third proportional valve, a fourth proportional valve, a first ejector, a second ejector, a cell stack, a water separator assembly, a hydrogen circulation pump and a system exhaust, wherein one end of the first proportional valve, one end of the second proportional valve and one end of the third proportional valve are all connected to an outlet of the hydrogen source; the other end of the first proportional valve and the other end of the second proportional valve are respectively connected to a high-pressure inlet of the first ejector and a high-pressure inlet of the second ejector; an outlet of a mixing cavity of the first ejector and an outlet of a mixing cavity of the second ejector are both connected to an anode inlet of the cell stack; a low-pressure inlet of the first ejector and a low-pressure inlet of the second ejector are both connected to the other end of the third proportional valve, an outlet of the hydrogen circulation pump and one end of the fourth proportional valve; the other end of the fourth proportional valve and an inlet of the hydrogen circulation pump are both connected to a gas outlet of the water separator assembly; an inlet of the water separator assembly is connected to an anode outlet of the cell stack; the water separator assembly comprises a nitrogen discharge port and a drain port, and a nitrogen discharge valve and a drain valve are connected to the nitrogen discharge port and the drain port respectively; an exhaust diluting cavity is connected between the nitrogen discharge valve and drain valve and an inlet of the system exhaust; and a cathode exhaust pipe is connected to the exhaust diluting cavity.

Optionally, a pressure reducing valve, a hydrogen heater and a hydrogen filter are sequentially connected to the outlet of the hydrogen source, and an outlet of the hydrogen filter is connected to an inlet of the first proportional valve, an inlet of the second proportional valve and an inlet of the third proportional valve.

Optionally, a first check valve and a second check valve are respectively connected to the low-pressure inlet of the first ejector and the low-pressure inlet of the second ejector, and an inlet of the first check valve and an inlet of the second check valve are both connected to the outlet of the hydrogen circulation pump.

Optionally, a pressure relief valve is connected to the anode inlet of the cell stack.

Optionally, the hydrogen circulation system has the following working modes:

Mode 1: the first proportional valve is turned off, the second proportional valve is turned off, the third proportional valve is turned on, the fourth proportional valve is turned off, the nitrogen source is turned on, and the hydrogen circulation pump is started;

Mode 2: the first proportional valve is turned off, the second proportional valve is turned on, the third proportional valve is turned off, the fourth proportional valve is turned on, the nitrogen source is turned on, and the hydrogen circulation pump is started or shut down;

Mode 3: the first proportional valve is turned on, the second proportional valve is turned off, the third proportional valve is turned off, the fourth proportional valve is turned on, the nitrogen source is turned on, and the hydrogen circulation pump is started or shut down;

Mode 4: the first proportional valve is turned on, the second proportional valve is turned on, the third proportional valve is turned off, the fourth proportional valve is turned on, the nitrogen source is turned on, and the hydrogen circulation pump is started or shut down;

Mode 5: the first proportional valve is turned on, the second proportional valve is turned on, the third proportional valve is turned on, the fourth proportional valve is turned off, the nitrogen source is turned on, and the hydrogen circulation pump is started;

Mode 6: the first proportional valve is turned on, the second proportional valve is turned off, the third proportional valve is turned on, the fourth proportional valve is turned off, the nitrogen source is turned on, and the hydrogen circulation pump is started;

Mode 7: the first proportional valve is turned off, the second proportional valve is turned on, the third proportional valve is turned on, the fourth proportional valve is turned off, the nitrogen source is turned on, and the hydrogen circulation pump is started.

In a second aspect, the invention provides a nitrogen discharge control method for a hydrogen circulation system for high-power fuel cells. The nitrogen discharge control method is based on the hydrogen circulation system for high-power fuel cells as described above, and when a single ejector, which is the first ejector or the second ejector, works, the nitrogen discharge control method comprises:

acquiring a cell stack flow resistance of the cell stack and an entrainment ratio of the single ejector, and calculating molar flow rates of gases at the anode inlet and the anode outlet of the cell stack according to the cell stack flow resistance and the entrainment ratio;

calculating an amount of hydrogen in moles in an anode circulation cavity of the hydrogen circulation system according to the molar flow rates of gases at the anode inlet and the anode outlet of the cell stack;

acquiring a desired excess coefficient of hydrogen of the cell stack, and calculating desired molar flow rates of hydrogen at the anode inlet and the anode outlet of the cell stack according to the desired excess coefficient of hydrogen;

calculating a desired amount of hydrogen in moles in the anode circulation cavity of the hydrogen circulation system according to the desired molar flow rates of hydrogen at the anode inlet and the anode outlet of the cell stack;

calculating a hydrogen deficiency of the cell stack according to the amount of hydrogen in moles and the desired amount of hydrogen in moles in the anode circulation cavity of the hydrogen circulation system; and

acquiring a single on-off time of the nitrogen discharge valve, calculating a number of times of turn-on of the nitrogen discharge valve according to the hydrogen deficiency and the single on-off time, and performing nitrogen discharge control according to the number of times of turn-on.

Optionally, calculating molar flow rates of gases at the anode inlet and the anode outlet of the cell stack according to the cell stack flow resistance and the entrainment ratio comprises:

Assuming that water vapor at the anode outlet of the cell stack is saturated and no liquid water is generated after the water separator assembly, constructing an expression of the molar flow rates of gases at the anode outlet of the cell stack:

$$\frac{nt_{out}^{H_2O}}{nt_{out}^{H_2} + nt_{out}^{N_2} + nt_{out}^{H_2O}} = \frac{P_{sat}(T_{out})}{P_{out}}$$

where, $nt_{out}^{H_2}, nt_{out}^{N_2}$ and $nt_{out}^{H_2O}$ are molar flow rates of hydrogen $H_2$, nitrogen $N_2$, and water vapor $H_2O$ at the anode outlet of the cell stack, $P_{out}$ is a pressure at the anode outlet of the cell stack, and $T_{out}$ is an outlet water temperature in case of a downflow cooling design of an anode of the cell stack and is an inlet water temperature in case of a counterflow cooling design of the anode of the cell stack;

$$P_{sat}(T_{out}) = 0.61121 * exp\left(\left(18.678 - \frac{T_{out}}{234.5}\right) * \left(\frac{T_{out}}{257.14 + T_{out}}\right)\right)$$

constructing an expression of the entrainment ratio of the single ejector:

$$k = F\left(P_{in}, P_{out}, m_{supply}^{H_2}\right) = \frac{nt_{out}^{H_2} * M_{H_2} + nt_{out}^{N_2} * M_{N_2} + nt_{out}^{H_2O} * M_{H_2O}}{m_{supply}^{H_2}}$$

where, $k$ is the entrainment ratio of the single ejector, $F$ is a characteristic function of the ejector, $P_{in}$ is a pressure at the anode inlet of the cell stack, $M_{H_2}, M_{N_2}$ and $M_{H_2O}$ are molar mass of hydrogen $H_2$, nitrogen $N_2$ and water vapor $H_2O$, and $m_{supply}^{H_2}$ is a molar mass flow rate of supplied hydrogen $H_2$;

$$m_{supply}^{H_2} = \frac{I_{stack} * N_{cell} * M_{H_2}}{96485 * 2}$$

constructing an expression of the cell stack flow resistance of the cell stack:

$$dP = \frac{a * (\eta_{in} + \eta_{out}) * (q_{in} + q_{out})}{4} + \frac{b * (\rho_{in} + \rho_{out}) * (q_{in} + q_{out})^2}{16}$$

where, $dP$ is the cell stack flow resistance, $\eta_{in}$ and $\eta_{out}$ are average viscosities of a gas mixture at the anode inlet and the anode outlet of the cell stack, $q_{in}$ and $q_{out}$ are average volume flow rates of the gas mixture at the anode inlet and the anode outlet of the cell stack, $\rho_{in}$ and $\rho_{out}$ are average densities of the gas mixture at the anode inlet and the anode outlet of the cell stack, and $a$ and $b$ are constant coefficients;

$$q_x = nt_x^{total} * 22.4 * \frac{T_x}{273.15} * \frac{101325}{P_x}$$

$$nt_x^{total} = nt_x^{H_2} + nt_x^{N_2} + nt_x^{H_2O}$$

where, $nt_x^{total}$ is an intermediate parameter, and when $x = in, out$, $nt_x^{H_2}, nt_x^{N_2}$ and $nt_x^{H_2O}$ are molar flow rates of hydrogen $H_2$, nitrogen $N_2$ and water vapor $H_2O$ at the anode inlet and the anode outlet of the cell stack; $T_x$ and

$P_x$ are a temperature and pressure of the gas mixture at the anode inlet and the anode outlet of the cell stack;

$$nt_{in}^{H_2} = nt_{out}^{H_2} + I_{stack} * N_{cell}/96485/2$$

$$nt_{in}^{N_2} = nt_{out}^{N_2}$$

$$nt_{in}^{H_2O} = nt_{out}^{H_2O}$$

substituting the cell stack flow resistance and the entrainment ratio into the expressions of the molar flow rates of gases at the anode outlet of the cell stack, the expression of the entrainment ratio of the single ejector, and the expression of the cell stack flow resistance of the cell stack to solve the molar flow rates $nt_{in}^{H_2}, nt_{in}^{N_2}$ and $nt_{in}^{H_2O}$ of gases at the anode inlet of the cell stack and the molar flow rates $nt_{out}^{H_2}, nt_{out}^{N_2}$ and $nt_{out}^{H_2O}$ of gases at the anode outlet of the cell stack.

Optionally, calculating an amount of hydrogen in moles in an anode circulation cavity of the hydrogen circulation system according to the molar flow rates of gases at the anode inlet and the anode outlet of the cell stack comprises:

dividing the anode circulation cavity into a first cavity extending from the anode outlet of the cell stack to the low-pressure inlet of the single ejector, a second cavity extending from the low-pressure inlet of the single ejector to the anode inlet of the cell stack, and a third cavity extending from the anode inlet to the anode outlet of the cell stack;
calculating an amount of hydrogen in moles in the first cavity, an amount of hydrogen in moles in the second cavity and an amount of hydrogen in moles in the third cavity according to the molar flow rates of gases at the anode inlet and the anode outlet of the cell stack:

$$n_1^{H_2} = \frac{nt_{out}^{H_2}}{nt_{out}^{H_2} + nt_{out}^{N_2} + nt_{out}^{H_2O}} * \frac{V_1 P_{out}}{101325} * \frac{273.15}{T_{out} * 22.4}$$

$$n_2^{H_2} = \frac{\left(nt_{out}^{H_2} + m_{supply}^{H_2}/M_{H_2}\right)}{\left(nt_{out}^{H_2} + m_{supply}^{H_2}/M_{H_2} + nt_{out}^{N_2} + nt_{out}^{H_2O}\right)} * \frac{V_2 P_{in}}{101325} * \frac{273.15}{T_{in} * 22.4}$$

$$n_3^{H_2} = \frac{\left(nt_{in}^{H_2} + nt_{out}^{H_2}\right)}{2\left(\frac{nt_{in}^{H_2} + nt_{out}^{H_2}}{2} + nt_{out}^{N_2} + nt_{out}^{H_2O}\right)} * \frac{V_3(P_{in} + P_{out})}{2 * 101325} * \frac{273.15}{\frac{T_{in} + T_{out}}{2} * 22.4}$$

where, $n_1^{H_2}, n_2^{H_2}$ and $n_3^{H_2}$ are the amount of hydrogen in moles in the first cavity, the amount of hydrogen in moles in the second cavity and the amount of hydrogen in moles in the third cavity, and $V_1$, $V_2$ and $V_3$ are a volume of the first cavity, a volume of the second cavity and a volume of the third cavity; and
calculating the amount of hydrogen in moles in the anode circulation cavity according to the amount of hydrogen in moles in the first cavity, the amount of hydrogen in moles in the second cavity and the amount of hydrogen in moles in the third cavity:

$$n_{total}^{H_2} = n_1^{H_2} + n_2^{H_2} + n_3^{H_2}.$$

Optionally, the desired molar flow rates of hydrogen at the anode inlet and the anode outlet of the cell stack are calculated by:

$$nt_{in_{req}}^{H_2} = \frac{I_{stack} * N_{cell} * \alpha}{96485 * 2}$$

$$nt_{out_{req}}^{H_2} = \frac{I_{stack} * N_{cell} * (\alpha - 1)}{96485 * 2}$$

where, $nt_{in_{req}}^{H_2}$ and $nt_{out_{req}}^{H_2}$ are the desired molar flow rates of hydrogen at the anode inlet and the anode outlet of the cell stack, $I_{stack}$ and $N_{cell}$ are a current of the cell stack and a number of cells of the cell stack, and $\alpha$ is a desired excess coefficient under a current working condition;

calculating a desired amount of hydrogen in moles in the anode circulation cavity of the hydrogen circulation system according to the desired molar flow rates of hydrogen at the anode inlet and the anode outlet of the cell stack comprises:

according to $nt_{out_{req}}^{H_2}$, calculating $nt_{out_{req}}^{H_2O}$ and $nt_{out_{req}}^{N_2}$:

$$\frac{nt_{out}^{H_2}}{nt_{out}^{H_2} + nt_{out}^{N_2} + nt_{out}^{H_2O}} = \frac{nt_{out_{req}}^{H_2}}{nt_{out_{req}}^{H_2} + nt_{out_{req}}^{N_2} + nt_{out_{req}}^{H_2O}}$$

$$nt_{out}^{H_2O} \cdot M_{H_2O} + nt_{out}^{N_2} \cdot M_{N_2} + nt_{out}^{H_2} \cdot M_{H_2}$$
$$= nt_{out_{req}}^{H_2O} \cdot M_{H_2O} + nt_{out_{req}}^{N_2} \cdot M_{N_2} + nt_{out_{req}}^{H_2} \cdot M_{H_2}$$

according to $nt_{in_{req}}^{H_2}, nt_{out_{req}}^{H_2}, nt_{out_{req}}^{H_2O}$ and $nt_{out_{req}}^{N_2}$, calculating a desired amount of hydrogen in moles in the first cavity, a desired amount of hydrogen in moles in the second cavity and a desired amount of hydrogen in moles in the third cavity;

calculating the desired amount of hydrogen in moles in the anode circulation cavity of the hydrogen circulation system according to the desired amount of hydrogen in moles in the first cavity, the desired amount of hydrogen in moles in the second cavity and the desired amount of hydrogen in moles in the third cavity:

$$n_{total_{req}}^{H_2} = n_{1_{req}}^{H_2} + n_{2_{req}}^{H_2} + n_{3_{req}}^{H_2}$$

where, $n_{1_{req}}^{H_2}, n_{2_{req}}^{H_2}$ and $n_{3_{req}}^{H_2}$ are the desired amount of hydrogen in moles in the first cavity, the desired amount of hydrogen in moles in the second cavity and the desired amount of hydrogen in moles in the third cavity.

Optionally, calculating a number of times of turn-on of the nitrogen discharge valve according to the hydrogen deficiency and the single on-off time comprises:

taking the hydrogen deficiency as a desired nitrogen discharge, constructing a ratio $\mu$ of total nitrogen discharge to the desired nitrogen discharge after the nitrogen discharge valve is turned on $K$ times:

$$\mu = \frac{\left| dn_{N_2}^1 + dn_{N_2}^2 + \cdots + dn_{N_2}^K - dn_{N_2} - dn_{N_2}^{diff} \right|}{dn_{N_2}}$$

where, $dn_{N_2}$ is the desired nitrogen discharge:

$$dn_{N_2} = n^{H_2}_{total_{req}} - n^{H_2}_{total}$$

$dn^{diff}_{N_2}$ is a quantity of nitrogen diffused from a cathode to the anode of the cell stack:

$$dn^{diff}_{N_2} = D_{N_2} * K * (d_t + d_s + d_e)$$

where, $d_t$, $d_s$ and $d_e$ are respectively an on-state duration, a turn-on time and a turn-off time of the nitrogen discharge valve; $D_{N_2}$ is a nitrogen diffusion rate;

$dn^k_{N_2}$ is a nitrogen discharge when the nitrogen discharge valve is turned on for a $k^{th}$ time:

$$dn^k_{N_2} = \frac{Q * P_{out}}{101.325} * \frac{273.15}{(T_{out} + 273.15) * 22.4} * fr^k_{N_2}, k = 1,2,3 \cdots K$$

where, $Q$ is a quantity of nitrogen discharged every time the nitrogen discharge valve is turned on:

$$Q = Q_t * d_t$$

where, $Q_t$ is a choked flow of the nitrogen discharger valve:

$$Q_t = C_v * C_q * P_{out}/T_{out}^{0.5}/\rho_{out}$$

where, $C_v$ is a flow coefficient, and $C_q$ is a flow parameter;

$fr^k_{N_2}$ is a nitrogen dischargeproportion when the nitrogen discharge valve is turned on for the $k^{th}$ time:

$$fr^k_{N_2} = \frac{nt^{H_2.k}_{out}}{nt^{H_2.k}_{out} + nt^{N_2.k}_{out} + nt^{H_2O.k}_{out}}$$

where, $nt^{H_2.k}_{out}, nt^{N_2.k}_{out}$ and $nt^{H_2O.k}_{out}$ are molar flow rates of hydrogen$H_2$, nitrogen $N_2$and water vapor $H_2O$ of the anode outlet of the cell stack when the nitrogen discharge valve is turned for the $k^{th}$ time:

$$nt^{H_2.k}_{out} = dn^{k-1}_{N_2} + nt^{H_2.k-1}_{out}$$

$$nt^{N_2.k}_{out} = nt^{H_2.k-1}_{out} - dn^{k-1}_{N_2}$$

$$nt^{H_2O.k}_{out} = nt^{H_2O.k-1}_{out}$$

setting the ratio $\mu$ of the total nitrogen discharge to the desired nitrogen discharge to a preset ratio threshold $\mu_0$ to solve the number$K$ of times.

Compared with the prior art, the invention fulfills the following beneficial effects:
According to the hydrogen circulation system for high-power fuel cells and the nitrogen discharge control method provided by the invention, the anode circulation structure designed for the circulation system allows for switching between different working modes by controlling the working state of multiple proportional valves, thus satisfying different anode circulation requirements; according to the nitrogen discharge control method, the deviation of the cell stack flow resistance is monitored in real time by means of a pressure sensor, component deviations and the excess of liquid water are calculated, and then a nitrogen discharge valve and circulation pump adjustment strategy is obtained by calculation to perform real-time adjustment to prevent flooding and hydrogen deficiencies of the anode of the cell stack, thus guaranteeing stable operation of a fuel cell system.

BRIEF DESCRIPTION OF THE SEVERAL VIEWS OF THE DRAWINGS

FIG. 1 is a schematic connection diagram of a hydrogen circulation system for high-power fuel cells according to Embodiment 1 of the invention;
FIG. 2 is a flow diagram of a nitrogen control method for a hydrogen circulation system for high-power fuel cells according to Embodiment 1 of the invention;

Reference Signs:

1, nitrogen source; 2, pressure reducing valve; 3, hydrogen heater; 4, hydrogen filter; 5, first proportional valve; 6, second proportional valve; 7, third proportional valve; 8, fourth proportional valve; 9, pressure relief valve; 10, nitrogen discharge valve; 11, drain valve; 12, water separator assembly; 13, hydrogen circulation pump; 14, first ejector; 15, second ejector; 16, exhaust diluting cavity; 17, cathode exhaust pipe; 18, system exhaust; 19, first pressure sensor; 20, second pressure sensor; 21, cell stack; 22, first check valve; 23, second check valve.

DETAILED DESCRIPTION OF THE INVENTION

The invention is further described below in conjunction with accompanying drawings. The following embodiments are merely used for more clearly explaining the technical solutions of the invention and are not intended to limit the protection scope of the invention.

Embodiment 1:

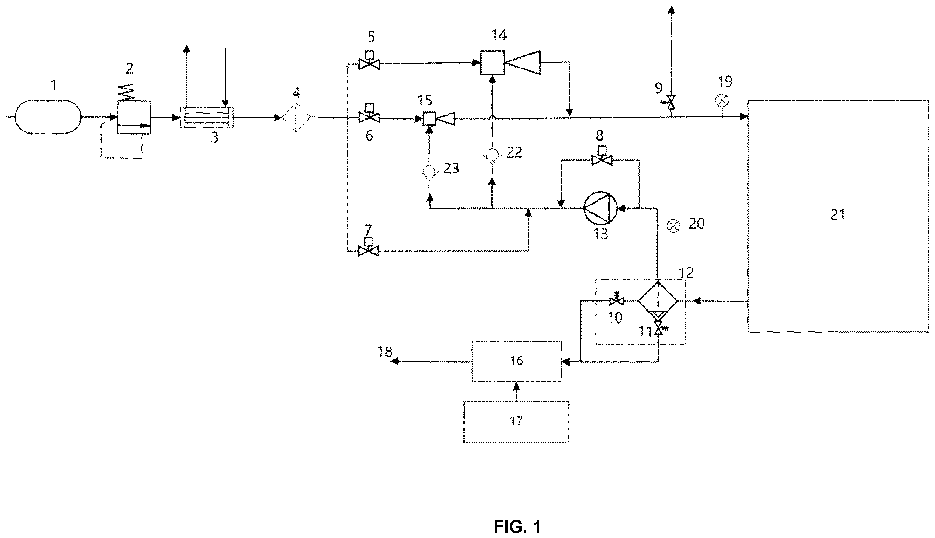

As shown in FIG. 1, this embodiment provides a hydrogen circulation system for high-power fuel cells, comprising a hydrogen source 1, a first proportional valve 5, a second proportional valve 6, a third proportional valve 7, a fourth proportional valve 8, a first ejector 14, a second ejector 15, a cell stack 21, a water separator assembly 12, a hydrogen circulation pump 13 and a system exhaust 18, wherein one end of the first proportional valve 5, one end of the second proportional valve 6 and one end of the third proportional valve 7 are all connected to an outlet of the hydrogen source 1; the other end of the first proportional valve 5 and the other end of the second proportional valve 6 are respectively connected to a high-pressure inlet of the first ejector 14 and a high-pressure inlet of the second ejector 15; an outlet of a mixing cavity of the first ejector 14 and an outlet of a mixing cavity of the second ejector 15 are both connected to an anode inlet of the cell stack 21; a low-pressure inlet of the first ejector 14 and a low-pressure inlet of the second ejector 15 are both connected to the other end of the third proportional valve 7, an outlet of the hydrogen circulation pump 13 and one end of the fourth proportional valve 8; the other end of the fourth proportional valve 8 and an inlet of the hydrogen circulation pump 13 are both connected to a gas outlet of the water separator assembly 12; an inlet of the water separator assembly 12 is connected to an anode outlet of the cell stack 21; the water separator assembly 12 comprises a nitrogen discharge port and a drain port, and a nitrogen discharge valve 10 and a drain valve 11 are connected to the nitrogen discharge port and the drain port respectively; an exhaust diluting cavity 16 is connected between the nitrogen discharge valve 10 and drain valve 11 and an inlet of the system exhaust 18; and a cathode exhaust pipe 17 is connected to the exhaust diluting cavity 16.

In an optional implementation, a pressure reducing valve 2, a hydrogen heater 3 and a hydrogen filter 4 are sequentially connected to the outlet of the hydrogen source 1, and an outlet of the hydrogen filter 4 is connected to an inlet of the first proportional valve 5, an inlet of the second proportional valve 6 and an inlet of the third proportional valve 7. The hydrogen source 1 is generally a high-pressure hydrogen cylinder, hydrogen is supplied from the hydrogen cylinder, the pressure of the hydrogen is controlled to be within a reasonable range, which is generally 15 bara-20 bara, by means of the pressure reducing valve 2, the hydrogen heater 3 then heats the hydrogen by means of cell stack cooling water to prevent liquid water from being generated after low-temperature mixing, and the hydrogen filter 4 filters physical impurities out of the hydrogen, and then the hydrogen enters the hydrogen circulation system.

In an optional implementation, a first check valve 22 and a second check valve 23 are respectively connected to the low-pressure inlet of the first ejector 14 and the low-pressure inlet of the second ejector 15, and an inlet of the first check valve 22 and an inlet of the second check valve 23 are both connected to the outlet of the hydrogen circulation pump 13. The first check valve 22 and the second check valve 23 can prevent a gas mixture from flowing back by means of the first ejector 14 and the second ejector 15.

In an optional implementation, a pressure relief valve 9 is connected to the anode inlet of the cell stack 21 to guarantee a normal pressure in the cell stack 21; a first pressure sensor 9 is arranged at the anode inlet of the cell stack 21 to detect the pressure at the anode inlet of the cell stack 21; and a second pressure sensor 20 is arranged between the gas outlet of the separator assembly 12 and the inlet of the hydrogen circulation pump 13 to detect the pressure at the anode outlet of the cell stack 21.

The hydrogen circulation system provided by this embodiment has the following working modes:

Mode 1: the first proportional valve 5 is turned off, the second proportional valve 6 is turned off, the third proportional valve 7 is turned on, the fourth proportional valve 8 is turned off, the nitrogen source 1 is turned on, and the hydrogen circulation pump 12 is started; circulating hydrogen flowing out of the gas outlet of the water separator assembly 12 enters the hydrogen circulation pump 13, supplied hydrogen is mixed with the circulating hydrogen at the outlet of the hydrogen circulation pump 13 by means of the third proportional valve 7, and the mixed hydrogen circulates to outlets of the first ejector 14 and the second ejector 15 along suction loops of the first ejector 14 and the second ejector 15and then enters the cell stack 21, such that a single-circulation pump working mode is realized. This working mode can satisfy the requirement for a low circulation and hydrogen supply rate in an idling condition; power-off purging and power-on purging can be realized, the hydrogen concentration in the anode loop and the cell stack 21 can be uniformized without excessive hydrogen supply, and compared with the use of ejectors, the utilization rate of hydrogen is increased; and this working mode supports cold-start icebreaking and variable-speed intermittent draining.

Mode 2: the first proportional valve 5 is turned off, the second proportional valve 6 is turned on, the third proportional valve 7 is turned off, the fourth proportional valve 8 is turned on, the nitrogen source 1 is turned on, and the hydrogen circulation pump 13 is started or shut down; circulating hydrogen passes through the water separator assembly 12, is then bypassed by the fourth proportional valve 8 to the outlet of the hydrogen circulation pump 13, and enters a suction inlet of the second ejector 15 by means of the second check valve 23, supplied hydrogen enters the high-pressure inlet of the second ejector 15 by means of the second proportional valve 6 to pressurize the circulating hydrogen and be mixed with the circulating hydrogen, and then the mixed hydrogen enters the cell stack 21 to participate in reaction. In this mode, one ejector (small-caliber) works, and the other large-caliber ejector does not work; because the optimal working range of the small-caliber second ejector 15 corresponds to a low hydrogen supply range, a sufficient anode circulation flow can be provided in case of medium-low current densities; and the hydrogen circulation pump 13 is bypassed and does not work, such that parasitic power is reduced, and system economy is improved.

Mode 3: the first proportional valve 5 is turned on, the second proportional valve 6 is turned off, the third proportional valve 7 is turned off, the fourth proportional valve 8 is turned on, the nitrogen source 1 is turned on, and the hydrogen circulation pump 13 is started or shut down; circulating hydrogen passes through the water separator assembly 12, is then bypassed by the fourth proportional valve 8 to the outlet of the hydrogen circulation pump 13, and enters a suction inlet of the first ejector 14 by means of the first check valve 22, supplied hydrogen enters the high-pressure inlet of the first ejector 14 by means of the first proportional valve 5 to pressurize the circulating hydrogen and be mixed with the circulating hydrogen, and then the mixed hydrogen enters the cell stack 21 to participate in reaction. In this mode, one ejector (large-caliber) works, and the other small-caliber ejector does not work; because the optimal working range of the large-caliber first ejector 14 corresponds to a high hydrogen supply range, a sufficient anode circulation flow can be provided in case of a medium current density; and the hydrogen circulation pump 13 is bypassed and does not work, such that parasitic power is reduced, and system economy is improved.

Mode 4: the first proportional valve 5 is turned on, the second proportional valve 6 is turned on, the third proportional valve 7 is turned off, the fourth proportional valve 8 is turned on, the nitrogen source 1 is turned on, and the hydrogen circulation pump 13 is started or shut down; circulating hydrogen passes through the water separator assembly 12, is then bypassed by the fourth proportional valve 8 to the outlet of the hydrogen circulation pump 13, one part of the circulating hydrogen enters the suction inlet of the first ejector 14 by means of the first check valve 22, and the other part of the circulating hydrogen enters the suction inlet of the second ejector 15 by means of the second check valve 23; one part of supplied hydrogen enters the high-pressure inlet of the first ejector 14 by means of the first proportional valve 5 and the other part of the supplied hydrogen enters the high-pressure inlet of the second ejector 15 by means of the second proportional valve 6 to pressurize the circulating hydrogen and be mixed with the circulating hydrogen, and then the mixed hydrogen enters the cell stack 21 to participate in reaction. In this mode, the two ejectors are connected in parallel to work together to provide a hydrogen supply and circulation flow greater than those provided when one ejector works, such that a sufficient anode circulation flow can be provided in case of a high current density; the hydrogen circulation pump 13 is bypassed and does not work, such that parasitic power is reduced, and system economy is improved.

Mode 5: the first proportional valve 5 is turned on, the second proportional valve 6 is turned on, the third proportional valve 7 is turned on, the fourth proportional valve 8 is turned off, the nitrogen source 1 is turned on, and the hydrogen circulation pump 13 is started;

after passing through the water separator assembly 12, circulating hydrogen is pressurized by the hydrogen circulating pump 13, one part of the pressurized circulating hydrogen enters the suction inlet of the first ejector 14 by means of the first check valve 22, and the other part of the pressurized circulating hydrogen enters the suction inlet of the second ejector 15 by means of the second check valve 23; one part of supplied hydrogen enters the high-pressure inlet of the first ejector 14 by means of the first proportional valve 5 and the other part of the supplied hydrogen enters the high-pressure inlet of the second ejector 15 by means of the second proportional valve 6 to pressurize the circulating hydrogen and be mixed with the circulating hydrogen, and then the mixed hydrogen enters the cell stack 21 to participate in reaction. In this mode, the two ejectors connected in parallel and the hydrogen circulation pump 13 work together to provide a hydrogen supply and circulation flow greater than those provided when the two ejectors work, and a sufficient anode circulation flow can be provided in case of a higher current density; moreover, the hydrogen circulation pump 13 are connected in series with the two ejectors, and the load can be changed quickly by changing the rotational speed of the hydrogen circulation pump 13, such that the technical problem of slow load changing caused by the use of ejectors for circulation.

Mode 6: the first proportional valve 5 is turned on, the second proportional valve 6 is turned off, the third proportional valve 7 is turned on, the fourth proportional valve 8 is turned off, the nitrogen source 1 is turned on, and the hydrogen circulation pump 13 is started. On the basis of the working mode where the two ejectors are connected in parallel and the hydrogen circulation pump 13 is connected in series of the two ejectors, the second proportional valve 6 is turned off to realize series connection of the second ejector 15 (small-caliber) and the hydrogen circulation pump 13 in this mode.

Mode 7: the first proportional valve 5 is turned off, the second proportional valve 6 is turned on, the third proportional valve 7 is turned on, the fourth proportional valve 8 is turned off, the nitrogen source 1 is turned on, and the hydrogen circulation pump 13 is started. Based on the working mode where the two ejectors are connected in parallel and the hydrogen circulation pump 13 is connected in series of the two ejectors, the first proportional valve 5 is turned off to realize series connection of the first ejector 15 (large-caliber) and the hydrogen circulation pump 13 in this mode. This working mode is suitable for more variable working conditions, and by mode switching, a smoother and more stable inlet pressure can be provided during the load changing process.

In addition, the hydrogen circulation system can be switched between multiple working mode to realize anode circulation in all working conditions; and the anode circulation system provided by the invention has high robustness specifically because:

all or part of circulation functions of the circulation system can be reserved in case of a failure or one or more parts.

(1) In a case where the hydrogen circulation pump 13 gets stuck, the hydrogen circulation pump 13 can be bypassed by means of the fourth proportional valve 8, and anode circulation is realized by one or two ejectors.

(2) In case of a failure of any one proportional valve (failure to turn on the proportional valve), for example, the first proportional valve 5 or the second proportional valve 6 cannot be turned on, one ejector and the hydrogen circulation pump 13 can be connected in series to work.

(3) In case of a failure of multiple parts, for example, the hydrogen circulation pump 13 gets tuck and the first proportional valve 5 or the second proportional valve 6 cannot be turned on, the hydrogen circulation pump 13 can be bypassed, and one ejector works.

By adopting the above working modes, all or part of power output characteristics of fuel cells can be reserved to avoid shutdowns, which may otherwise affect scenario operation.

Embodiment 2:

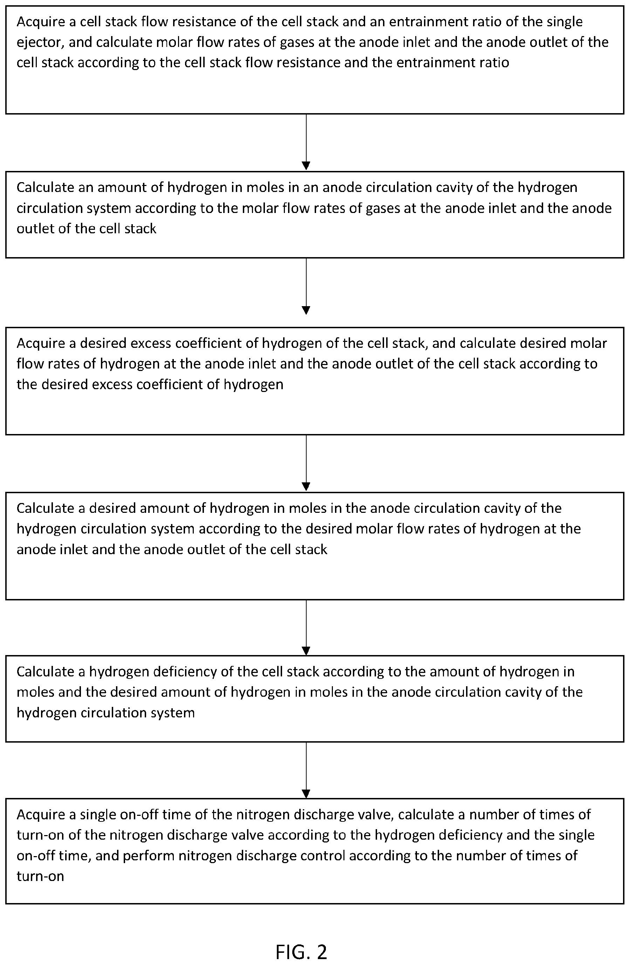

As shown in FIG. 2, this embodiment provides a nitrogen discharge control method for a hydrogen circulation system for high-power fuel cells. The nitrogen discharge control method is based on the hydrogen circulation system for high-power fuel cells as described in Embodiment 1, and when a single ejector, which is the first ejector or the second ejector, works, the nitrogen discharge control method comprises the following steps:

S 1, acquiring a cell stack flow resistance of the cell stack and an entrainment ratio of the single ejector, and calculating molar flow rates of gases at the anode inlet and the anode outlet of the cell stack according to the cell stack flow resistance and the entrainment ratio;

in an optional implementation, calculating molar flow rates of gases at the anode inlet and the anode outlet of the cell stack according to the cell stack flow resistance and the entrainment ratio comprises:

assuming that water vapor at the anode outlet of the cell stack is saturated and no liquid water is generated after the water separator assembly, constructing an expression of the molar flow rates of gases at the anode outlet of the cell stack:

$$\frac{nt_{out}^{H_2O}}{nt_{out}^{H_2} + nt_{out}^{N_2} + nt_{out}^{H_2O}} = \frac{P_{sat}(T_{out})}{P_{out}}$$

where, $nt_{out}^{H_2}, nt_{out}^{N_2}$ and $nt_{out}^{H_2O}$ are molar flow rates of hydrogen $H_2$, nitrogen $N_2$, and water vapor $H_2O$ at the anode outlet of the cell stack, $P_{out}$ is a pressure at the anode outlet of the cell stack, and $T_{out}$ is an outlet water temperature in case of a downflow cooling design of an anode of the cell stack and is an inlet water temperature in case of a counterflow cooling design of the anode of the cell stack; $P_{sat}(T_{out})$ is calculated by a Buck formula to make an error less than 0.1% under 0-100°C:

$$P_{sat}(T_{out}) = 0.61121 * exp\left(\left(18.678 - \frac{T_{out}}{234.5}\right) * \left(\frac{T_{out}}{257.14 + T_{out}}\right)\right)$$

constructing an expression of the entrainment ratio of the single ejector:

$$k = F\left(P_{in}, P_{out}, m_{supply}^{H_2}\right) = \frac{nt_{out}^{H_2} * M_{H_2} + nt_{out}^{N_2} * M_{N_2} + nt_{out}^{H_2O} * M_{H_2O}}{m_{supply}^{H_2}}$$

where, $k$ is the entrainment ratio of the single ejector, $F$ is a characteristic function of the ejector, $P_{in}$ is a pressure at the anode inlet of the cell stack, $M_{H_2}$, $M_{N_2}$ and $M_{H2O}$ are molar mass of hydrogen $H_2$, nitrogen $N_2$ and water vapor $H_2O$, and $m_{supply}^{H_2}$ is a molar mass flow rate of supplied hydrogen $H_2$;

$$m_{supply}^{H_2} = \frac{I_{stack} * N_{cell} * M_{H_2}}{96485 * 2}$$

constructing an expression of the cell stack flow resistance of the cell stack:

$$dP = \frac{a * (\eta_{in} + \eta_{out}) * (q_{in} + q_{out})}{4} + \frac{b * (\rho_{in} + \rho_{out}) * (q_{in} + q_{out})^2}{16}$$

where, $dP$ is the cell stack flow resistance, $\eta_{in}$ and $\eta_{out}$ are average viscosities of a gas mixture at the anode inlet and the anode outlet of the cell stack, $q_{in}$ and $q_{out}$ are average volume flow rates of the gas mixture at the anode inlet and the anode outlet of the cell stack, $\rho_{in}$ and $\rho_{out}$ are average densities of the gas mixture at the anode inlet and the anode outlet of the cell stack, and $a$ and b are constant coefficients;

$$q_x = nt_x^{total} * 22.4 * \frac{T_x}{273.15} * \frac{101325}{P_x}$$

$$nt_x^{total} = nt_x^{H_2} + nt_x^{N_2} + nt_x^{H_2O}$$

where, $nt_x^{total}$ is an intermediate parameter, and when x = in, out , $nt_x^{H_2}, nt_x^{N_2}$ and $nt_x^{H_2O}$ are molar flow rates of hydrogen $H_2$, nitrogen $N_2$ and water vapor $H_2O$ at the anode inlet and the anode outlet of the cell stack; $T_x$ and $P_x$ are a temperature and pressure of the gas mixture at the anode inlet and the anode outlet of the cell stack;

$$nt_{in}^{H_2} = nt_{out}^{H_2} + I_{stack} * N_{cell}/96485/2$$

$$nt_{in}^{N_2} = nt_{out}^{N_2}$$

$$nt_{in}^{H_2O} = nt_{out}^{H_2O}$$

substituting the cell stack flow resistance and the entrainment ratio into the expressions of the molar flow rates of gases at the anode outlet of the cell stack, the expression of the entrainment ratio of the single ejector, and the expression of the cell stack flow resistance of the cell stack to solve the molar flow rates $nt_{in}^{H_2}, nt_{in}^{N_2}$ and $nt_{in}^{H_2O}$ of gases at the anode inlet of the cell stack and the molar flow rates $nt_{out}^{H_2}, nt_{out}^{N_2}$ and $nt_{out}^{H_2O}$ of gases at the anode outlet of the cell stack.

$$\rho_x = nfr_x^{H_2} * \rho^{H_2}(P,T) + nfr_x^{N_2} * \rho^{N_2}(P,T) + nfr_x^{H_2O} * \rho^{H_2O}(P,T)$$

Where, $\rho^{H_2}(P, T)$, $\rho^{N_2}(P, T)$ and $\rho^{H_2O}(P, T)$ are gas densities of hydrogen $H_2$, nitrogen $N_2$ and water vapor $H_2O$ at a pressure P and a temperature T, and when x = in, out, $nfr_x^{H_2}, nfr_x^{N_2}$ and $nfr_x^{H_2O}$ are molar components of hydrogen $H_2$, nitrogen $N_2$ and water vapor $H_2O$ at the anode inlet and the anode outlet of the cell stack;

$$\eta_x = mfr_x^{H_2} * \eta^{H_2}(T) + mfr_x^{N_2} * \eta^{N_2}(T) + mfr_x^{H_2O} * \eta^{H_2O}(T)$$

where, $\eta^{H_2}(T), \eta^{N_2}(T)$ and $\eta^{H_2O}(T)$ are gas viscosities of hydrogen $H_2$, nitrogen $N_2$ and water vapor $H_2O$ at the temperature T, and when x = in, out , $mfr_x^{H_2}, mfr_x^{N_2}$ and $mfr_x^{H_2O}$ are mass components of hydrogen $H_2$, nitrogen $N_2$ and water vapor $H_2O$ at the anode inlet and the anode outlet of the cell stack.
S2, calculating an amount of hydrogen in moles in an anode circulation cavity of the hydrogen circulation system according to the molar flow rates of gases at the anode inlet and the anode outlet of the cell stack;

In an optional implementation, calculating an amount of hydrogen in moles in an anode circulation cavity of the hydrogen circulation system according to the molar flow rates of gases at the anode inlet and the anode outlet of the cell stack comprises:

dividing the anode circulation cavity into a first cavity from the anode outlet of the cell stack to the low-pressure inlet of the single ejector, a second cavity from the low-pressure inlet of the single ejector to the anode inlet of the cell stack, and a third cavity from the anode inlet to the anode outlet of the cell stack;
calculating an amount of hydrogen in moles in the first cavity, an amount of hydrogen in moles in the second cavity and an amount of hydrogen in moles in the third cavity according to the molar flow rates of gases at the anode inlet and the anode outlet of the cell stack:

$$n_1^{H_2} = \frac{nt_{out}^{H_2}}{nt_{out}^{H_2} + nt_{out}^{N_2} + nt_{out}^{H_2O}} * \frac{V_1 P_{out}}{101325} * \frac{273.15}{T_{out} * 22.4}$$

$$n_2^{H_2} = \frac{\left(nt_{out}^{H_2} + m_{supply}^{H_2}/M_{H_2}\right)}{\left(nt_{out}^{H_2} + m_{supply}^{H_2}/M_{H_2} + nt_{out}^{N_2} + nt_{out}^{H_2O}\right)} * \frac{V_2 P_{in}}{101325} * \frac{273.15}{T_{in} * 22.4}$$

$$n_3^{H_2} = \frac{\left(nt_{in}^{H_2} + nt_{out}^{H_2}\right)}{2\left(\frac{nt_{in}^{H_2} + nt_{out}^{H_2}}{2} + nt_{out}^{N_2} + nt_{out}^{H_2O}\right)} * \frac{V_3(P_{in} + P_{out})}{2 * 101325} * \frac{273.15}{\frac{T_{in} + T_{out}}{2} * 22.4}$$

where, $n_1^{H_2}, n_2^{H_2}$ and $n_3^{H_2}$ are the amount of hydrogen in moles in the first cavity, the amount of hydrogen in moles in the second cavity and the amount of hydrogen in moles in the third cavity, and $V_1$, $V_2$ and $V_3$ are a volume of the first cavity, a volume of the second cavity and a volume of the third cavity; and
calculating the amount of hydrogen in moles in the anode circulation cavity according to the amount of hydrogen in moles in the first cavity, the amount of hydrogen in moles in the second cavity and the amount of hydrogen in moles in the third cavity:

$$n_{total}^{H_2} = n_1^{H_2} + n_2^{H_2} + n_3^{H_2}.$$

S3, acquiring a desired excess coefficient of hydrogen of the cell stack, and calculating desired molar flow rates of hydrogen at the anode inlet and the anode outlet of the cell stack according to the desired excess coefficient of hydrogen;
in an optional implementation, the desired molar flow rates of hydrogen at the anode inlet and the anode outlet of the cell stack are calculated by:

$$nt_{in_{req}}^{H_2} = \frac{I_{stack} * N_{cell} * \alpha}{96485 * 2}$$

$$nt_{out_{req}}^{H_2} = \frac{I_{stack} * N_{cell} * (\alpha - 1)}{96485 * 2}$$

where, $nt_{in_{req}}^{H_2}$ and $nt_{out_{req}}^{H_2}$ are the desired molar flow rates of hydrogen at the anode inlet and the anode outlet of the cell stack, $I_{stack}$ and $N_{cell}$ are a current of the cell stack and a number of cells of the cell stack, and $\alpha$ is a desired excess coefficient in a current working condition.
S4, calculating a desired amount of hydrogen in moles in the anode circulation cavity of the hydrogen circulation system according to the desired molar flow rates of hydrogen at the anode inlet and the anode outlet of the cell stack;
in an optional implementation, calculating a desired amount of hydrogen in moles in the anode circulation cavity of the hydrogen circulation system according to the desired molar flow rates of hydrogen at the anode inlet and the anode outlet of the cell stack comprises:
according to $nt_{out_{req}}^{H_2}$, calculating $nt_{out_{req}}^{H_2O}$ and $nt_{out_{req}}^{N_2}$ :

$$\frac{nt_{out}^{H_2}}{nt_{out}^{H_2} + nt_{out}^{N_2} + nt_{out}^{H_2O}} = \frac{nt_{out_{req}}^{H_2}}{nt_{out_{req}}^{H_2} + nt_{out_{req}}^{N_2} + nt_{out_{req}}^{H_2O}}$$

$$nt_{out}^{H_2O} \cdot M_{H_2O} + nt_{out}^{N_2} \cdot M_{N_2} + nt_{out}^{H_2} \cdot M_{H_2}$$

$$= nt_{out_{req}}^{H_2O} \cdot M_{H_2O} + nt_{out_{req}}^{N_2} \cdot M_{N_2} + nt_{out_{req}}^{H_2} \cdot M_{H_2}$$

according to $nt_{in_{req}}^{H_2}, nt_{out_{req}}^{H_2}, nt_{out_{req}}^{H_2O}$ and $nt_{out_{req}}^{N_2}$, calculating a desired amount of hydrogen in moles in the first cavity, a desired amount of hydrogen in moles in the second cavity and a desired amount of hydrogen in moles in the third cavity;

calculating the desired amount of hydrogen in moles in the anode circulation cavity of the hydrogen circulation system according to the desired amount of hydrogen in moles in the first cavity, the desired amount of hydrogen in moles in the second cavity and the desired amount of hydrogen in moles in the third cavity:

$$n_{total_{req}}^{H_2} = n_{1_{req}}^{H_2} + n_{2_{req}}^{H_2} + n_{3_{req}}^{H_2}$$

where, $n_{1_{req}}^{H_2}, n_{2_{req}}^{H_2}$ and $n_{3_{req}}^{H_2}$ are the desired amount of hydrogen in moles in the first cavity, the desired amount of hydrogen in moles in the second cavity and the desired amount of hydrogen in moles in the third cavity.

S5, calculating a hydrogen deficiency $n_{total_{req}}^{H_2} - n_{total}^{H_2}$ the cell stack according to the amount of hydrogen in moles and the desired amount of hydrogen in moles in the anode circulation cavity of the hydrogen circulation system.

S6, acquiring a single on-off time of the nitrogen discharge valve, calculating a number of times of turn-on of the nitrogen discharge valve according to the hydrogen deficiency and the single on-off time, and performing nitrogen discharge control according to the number of times of turn-on;

in an optional implementation, calculating a number of times of turn-on of the nitrogen discharge valve according to the hydrogen deficiency and the single on-off time comprises:

taking the hydrogen deficiency as a desired nitrogen discharge, constructing a ratio $\mu$ of total nitrogen discharge after the nitrogen discharge valve is turned on *K* times to the desired nitrogen discharge:

$$\mu = \frac{\left| dn_{N_2}^1 + dn_{N_2}^2 + \cdots + dn_{N_2}^K - dn_{N_2} - dn_{N_2}^{diff} \right|}{dn_{N_2}}$$

where, $dn_{N_2}$ is the desired nitrogen discharge:

$$dn_{N_2} = n_{total_{req}}^{H_2} - n_{total}^{H_2}$$

$dn_{N_2}^{diff}$ is a quantity of nitrogen diffused from a cathode to the anode of the cell stack:

$$dn_{N_2}^{diff} = D_{N_2} * K * (d_t + d_s + d_e)$$

where, $d_t$, $d_s$ and $d_e$ are respectively an on-state duration, a turn-on time and a tun-off time of the nitrogen discharge valve; $D_{N_2}$ is a nitrogen diffusion rate;

$dn_{N_2}^k$ is a nitrogen discharge when the nitrogen discharge valve is turned on for a *k*th time:

$$dn_{N_2}^k = \frac{Q * P_{out}}{101.325} * \frac{273.15}{(T_{out} + 273.15) * 22.4} * fr_{N_2}^k, k = 1,2,3 \cdots K$$

where, *Q* is a quantity of nitrogen discharged every time the nitrogen discharge valve is turned on:

$$Q = Q_t * d_t$$

where, $Q_t$ is a choked flow of the nitrogen discharger valve:

$$Q_t = C_v * C_q * P_{out}/T_{out}^{0.5}/\rho_{out}$$

where, $C_v$ is a flow coefficient, and $C_q$ is a flow parameter;

$fr_{N_2}^k$ is a nitrogen discharge proportion when the nitrogen discharge valve is turned on for the $k^{th}$ time:

$$fr_{N_2}^k = \frac{nt_{out}^{H_2.k}}{nt_{out}^{H_2.k} + nt_{out}^{N_2.k} + nt_{out}^{H_2O.k}}$$

where, $nt_{out}^{H_2.k}, nt_{out}^{N_2.k}$ and $nt_{out}^{H_2O.k}$ are molar flow rates of hydrogen $H_2$, nitrogen $N_2$ and water vapor $H_2O$ of the anode outlet of the cell stack when the nitrogen discharge valve is turned for the $k^{th}$ time:

$$nt_{out}^{H_2.k} = dn_{N_2}^{k-1} + nt_{out}^{H_2.k-1}$$

$$nt_{out}^{N_2.k} = nt_{out}^{H_2.k-1} - dn_{N_2}^{k-1}$$

$$nt_{out}^{H_2O.k} = nt_{out}^{H_2O.k-1}$$

setting the ratio $\mu$ of the total nitrogen discharge to the desired nitrogen discharge to a preset ratio threshold $\mu_0$ to solve the number $K$ of times.

By adopting this calculation method, the deviation of hydrogen can be obtained accurately, and a corresponding pre-control and nitrogen discharge strategy can be obtained to satisfy hydrogen reflux requirements, thus preventing damage to cell stacks of fuel cells caused by hydrogen deficiencies.

Those skilled in the art should understand that the embodiments of the invention can be provided as a method, system or computer program product. Therefore, the invention can be implemented as pure hardware embodiments, pure software embodiments, or embodiments combining software and hardware. In addition, the invention may be implemented as a computer program product executed on one or more computer-available storage media comprising computer-available program codes (including, but not limited to, a disk memory, a CD-ROM and an optical memory).

The invention is described with reference to the flow diagram and/or block diagram of the method, device (system) and computer program product in the embodiments of the invention. It should be understood that each process and/or block in the flow diagram and/or block diagram and the combination of the processes and/or blocks in the flow diagram and/or block diagram can be implemented by means of computer program instructions. These computer program instructions may be provided in a general-purpose computer, a special-purpose computer, an embedded processor or a processor of other programmable data processing devices to create a machine, such that the instructions can be executed by the computer or the processor of other programmable data processing devices to produce a device for implementing one or more processes in the flow diagram and/or functions specified in one or more blocks in the block diagram.

These computer program instructions can also be stored in a computer-readable memory capable of guiding a computer or other programmable data processing devices to work in a specific manner, such that the instructions stored in the computer-readable memory can create a product comprising an instruction device for implementing one or more processes in the flow diagram and/or functions specified in one or more blocks in the block diagram.

These computer program instructions can also be loaded in a computer or other programmable data processing devices to allow a series of operation steps to be performed on the computer or other programmable data processing devices to realize computer processing, such that the instructions executed on the computer or other programmable data processing devices can perform steps for implementing one or more processes in the flow diagram and/or functions specified in one or more blocks in the block diagram.

Preferred embodiments of the invention are described above. It should be pointed out that those ordinarily skilled in the art can make some improvements and transformations without departing from the technical principle of the invention, and all these improvements and transformations should also fall within the protection scope of the invention.

**Claims**

1. A hydrogen circulation system for high-power fuel cells, comprising a hydrogen source, a first proportional valve, a second proportional valve, a third proportional valve, a fourth proportional valve, a first ejector, a second ejector, a cell stack, a water separator assembly, a hydrogen circulation pump and a system exhaust, wherein one end of the first proportional valve, one end of the second proportional valve and one end of the third proportional valve are all connected to an outlet of the hydrogen source; the other end of the first proportional valve and the other end of the second proportional valve are respectively connected to a high-pressure inlet of the first ejector and a high-pressure inlet of the second ejector; an outlet of a mixing cavity of the first ejector and an outlet of a mixing cavity of the second ejector are both connected to an anode inlet of the cell stack; a low-pressure inlet of the first ejector and a low-pressure inlet of the second ejector are both connected to the other end of the third proportional valve, an outlet of the hydrogen circulation pump and one end of the fourth proportional valve; the other end of the fourth proportional valve and an inlet of the hydrogen circulation pump are both connected to a gas outlet of the water separator assembly; an inlet of the water separator assembly is connected to an anode outlet of the cell stack; the water separator assembly comprises a nitrogen discharge port and a drain port, and a nitrogen discharge valve and a drain valve are connected to the nitrogen discharge port and the drain port respectively; an exhaust diluting cavity is connected between the nitrogen discharge valve and drain valve and an inlet of the system exhaust; and a cathode exhaust pipe is connected to the exhaust diluting cavity.

2. The hydrogen circulation system for high-power fuel cells according to Claim 1, wherein a pressure reducing valve, a hydrogen heater and a hydrogen filter are sequentially connected to the outlet of the hydrogen source, and an outlet of the hydrogen filter is connected to an inlet of the first proportional valve, an inlet of the second proportional valve and an inlet of the third proportional valve.

3. The hydrogen circulation system for high-power fuel cells according to Claim 1, wherein a first check valve and a second check valve are respectively connected to the low-pressure inlet of the first ejector and the low-pressure inlet of the second ejector, and an inlet of the first check valve and an inlet of the second check valve are both connected to the outlet of the hydrogen circulation pump.

4. The hydrogen circulation system for high-power fuel cells according to Claim 1, wherein a pressure relief valve is connected to the anode inlet of the cell stack.

5. The hydrogen circulation system for high-power fuel cells according to Claim 1, wherein the hydrogen circulation system has the following working modes:

   Mode 1: the first proportional valve is turned off, the second proportional valve is turned off, the third proportional valve is turned on, the fourth proportional valve is turned off, the nitrogen source is turned on, and the hydrogen circulation pump is started;
   Mode 2: the first proportional valve is turned off, the second proportional valve is turned on, the third proportional valve is turned off, the fourth proportional valve is turned on, the nitrogen source is turned on, and the hydrogen circulation pump is started or shut down;
   Mode 3: the first proportional valve is turned on, the second proportional valve is turned off, the third proportional valve is turned off, the fourth proportional valve is turned on, the nitrogen source is turned on, and the hydrogen circulation pump is started or shut down;
   Mode 4: the first proportional valve is turned on, the second proportional valve is turned on, the third proportional valve is turned off, the fourth proportional valve is turned on, the nitrogen source is turned on, and the hydrogen circulation pump is started or shut down;
   Mode 5: the first proportional valve is turned on, the second proportional valve is turned on, the third proportional valve is turned on, the fourth proportional valve is turned off, the nitrogen source is turned on, and the hydrogen circulation pump is started;
   Mode 6: the first proportional valve is turned on, the second proportional valve is turned off, the third proportional valve is turned on, the fourth proportional valve is turned off, the nitrogen source is turned on, and the hydrogen circulation pump is started;
   Mode 7: the first proportional valve is turned off, the second proportional valve is turned on, the third proportional valve is turned on, the fourth proportional valve is turned off, the nitrogen source is turned on, and the hydrogen circulation pump is started.

6. A nitrogen discharge control method for a hydrogen circulation system for high-power fuel cells, wherein the nitrogen discharge control method is based on the hydrogen circulation system for high-power fuel cells according to any one of Claims 1-5, and when a single ejector, which is the first ejector or the second ejector, works, the nitrogen discharge control method comprises:

acquiring a cell stack flow resistance of the cell stack and an entrainment ratio of the single ejector, and calculating molar flow rates of gases at the anode inlet and the anode outlet of the cell stack according to the cell stack flow resistance and the entrainment ratio;

calculating an amount of hydrogen in moles in an anode circulation cavity of the hydrogen circulation system according to the molar flow rates of gases at the anode inlet and the anode outlet of the cell stack;

acquiring a desired excess coefficient of hydrogen of the cell stack, and calculating desired molar flow rates of hydrogen at the anode inlet and the anode outlet of the cell stack according to the desired excess coefficient of hydrogen;

calculating a desired amount of hydrogen in moles in the anode circulation cavity of the hydrogen circulation system according to the desired molar flow rates of hydrogen at the anode inlet and the anode outlet of the cell stack;

calculating a hydrogen deficiency of the cell stack according to the amount of hydrogen in moles and the desired amount of hydrogen in moles in the anode circulation cavity of the hydrogen circulation system; and

acquiring a single on-off time of the nitrogen discharge valve, calculating a number of times of turn-on of the nitrogen discharge valve according to the hydrogen deficiency and the single on-off time, and performing nitrogen discharge control according to the number of times of turn-on.

7. The nitrogen discharge control method for a hydrogen circulation system for high-power fuel cells according to Claim 6, wherein calculating molar flow rates of gases at the anode inlet and the anode outlet of the cell stack according to the cell stack flow resistance and the entrainment ratio comprises:

assuming that water vapor at the anode outlet of the cell stack is saturated and no liquid water is generated after the water separator assembly, constructing an expression of the molar flow rates of gases at the anode outlet of the cell stack:

$$\frac{nt_{out}^{H_2O}}{nt_{out}^{H_2} + nt_{out}^{N_2} + nt_{out}^{H_2O}} = \frac{P_{sat}(T_{out})}{P_{out}}$$

where, $nt_{out}^{H_2}, nt_{out}^{N_2}$ and $nt_{out}^{H_2O}$ are molar flow rates of hydrogen $H_2$, nitrogen $N_2$, and water vapor $H_2O$ at the anode outlet of the cell stack, $P_{out}$ is a pressure at the anode outlet of the cell stack, and $T_{out}$ is an outlet water temperature in case of a downflow cooling design of an anode of the cell stack and is an inlet water temperature in case of a counterflow cooling design of the anode of the cell stack;

$$P_{sat}(T_{out}) = 0.61121 * exp\left(\left(18.678 - \frac{T_{out}}{234.5}\right) * \left(\frac{T_{out}}{257.14 + T_{out}}\right)\right)$$

constructing an expression of the entrainment ratio of the single ejector:

$$k = F\left(P_{in}, P_{out}, m_{supply}^{H_2}\right) = \frac{nt_{out}^{H_2} * M_{H_2} + nt_{out}^{N_2} * M_{N_2} + nt_{out}^{H_2O} * M_{H_2O}}{m_{supply}^{H_2}}$$

where, $k$ is the entrainment ratio of the single ejector, $F$ is a characteristic function of the ejector, $P_{in}$ is a pressure at the anode inlet of the cell stack, $M_{H_2}$, $M_{N_2}$ and $M_{H2O}$ are molar mass of hydrogen $H_2$, nitrogen $N_2$ and water vapor

$H_2O$, and $m^{H_2}_{supply}$ is a molar mass flow rate of supplied hydrogen $H_2$;

$$m^{H_2}_{supply} = \frac{I_{stack} * N_{cell} * M_{H_2}}{96485 * 2}$$

constructing an expression of the cell stack flow resistance of the cell stack:

$$dP = \frac{a * (\eta_{in} + \eta_{out}) * (q_{in} + q_{out})}{4} + \frac{b * (\rho_{in} + \rho_{out}) * (q_{in} + q_{out})^2}{16}$$

where, $dP$ is the cell stack flow resistance, $\eta_{in}$ and $\eta_{out}$ are average viscosities of a gas mixture at the anode inlet and the anode outlet of the cell stack, $q_{in}$ and $q_{out}$ are average volume flow rates of the gas mixture at the anode inlet and the anode outlet of the cell stack, $\rho_{in}$ and $\rho_{out}$ are average densities of the gas mixture at the anode inlet and the anode outlet of the cell stack, and $a$ and $b$ are constant coefficients;

$$q_x = nt^{total}_x * 22.4 * \frac{T_x}{273.15} * \frac{101325}{P_x}$$

$$nt^{total}_x = nt^{H_2}_x + nt^{N_2}_x + nt^{H_2O}_x$$

where, $nt^{total}_x$ is an intermediate parameter, and when $x = in, out,$ $nt^{H_2}_x, nt^{N_2}_x$ and $nt^{H_2O}_x$ are molar flow rates of hydrogen $H_2$, nitrogen $N_2$ and water vapor $H_2O$ at the anode inlet and the anode outlet of the cell stack; $T_x$ and $P_x$ are a temperature and pressure of the gas mixture at the anode inlet and the anode outlet of the cell stack;

$$nt^{H_2}_{in} = nt^{H_2}_{out} + I_{stack} * N_{cell}/96485/2$$

$$nt^{N_2}_{in} = nt^{N_2}_{out}$$

$$nt^{H_2O}_{in} = nt^{H_2O}_{out}$$

substituting the cell stack flow resistance and the entrainment ratio into the expressions of the molar flow rates of gases at the anode outlet of the cell stack, the expression of the entrainment ratio of the single ejector, and the expression of the cell stack flow resistance of the cell stack to solve the molar flow rates $nt^{H_2}_{in}, nt^{N_2}_{in}$ and $nt^{H_2O}_{in}$ of gases at the anode inlet of the cell stack and the molar flow rates $nt^{H_2}_{out}, nt^{N_2}_{out}$ and $nt^{H_2O}_{out}$ of gases at the anode outlet of the cell stack.

8. The nitrogen discharge control method for a hydrogen circulation system for high-power fuel cells according to Claim 7, wherein calculating an amount of hydrogen in moles in an anode circulation cavity of the hydrogen circulation system according to the molar flow rates of gases at the anode inlet and the anode outlet of the cell stack comprises:

dividing the anode circulation cavity into a first cavity extending from the anode outlet of the cell stack to the low-pressure inlet of the single ejector, a second cavity extending from the low-pressure inlet of the single ejector to the anode inlet of the cell stack, and a third cavity extending from the anode inlet to the anode outlet of the cell stack; calculating an amount of hydrogen in moles in the first cavity, an amount of hydrogen in moles in the second cavity and an amount of hydrogen in moles in the third cavity according to the molar flow rates of gases at the anode inlet and the anode outlet of the cell stack:

$$n_1^{H_2} = \frac{nt_{out}^{H_2}}{nt_{out}^{H_2} + nt_{out}^{N_2} + nt_{out}^{H_2O}} * \frac{V_1 P_{out}}{101325} * \frac{273.15}{T_{out} * 22.4}$$

$$n_2^{H_2} = \frac{\left(nt_{out}^{H_2} + m_{supply}^{H_2}/M_{H_2}\right)}{\left(nt_{out}^{H_2} + m_{supply}^{H_2}/M_{H_2} + nt_{out}^{N_2} + nt_{out}^{H_2O}\right)} * \frac{V_2 P_{in}}{101325} * \frac{273.15}{T_{in} * 22.4}$$

$$n_3^{H_2} = \frac{\left(nt_{in}^{H_2} + nt_{out}^{H_2}\right)}{2\left(\frac{nt_{in}^{H_2} + nt_{out}^{H_2}}{2} + nt_{out}^{N_2} + nt_{out}^{H_2O}\right)} * \frac{V_3(P_{in} + P_{out})}{2 * 101325} * \frac{273.15}{\frac{T_{in}+T_{out}}{2} * 22.4}$$

where, $n_1^{H_2}, n_2^{H_2}$ and $n_3^{H_2}$ are the amount of hydrogen in moles in the first cavity, the amount of hydrogen in moles in the second cavity and the amount of hydrogen in moles in the third cavity, and $V_1$, $V_2$ and $V_3$ are a volume of the first cavity, a volume of the second cavity and a volume of the third cavity; and
calculating the amount of hydrogen in moles in the anode circulation cavity according to the amount of hydrogen in moles in the first cavity, the amount of hydrogen in moles in the second cavity and the amount of hydrogen in moles in the third cavity:

$$n_{total}^{H_2} = n_1^{H_2} + n_2^{H_2} + n_3^{H_2}.$$

9. The nitrogen discharge control method for a hydrogen circulation system for high-power fuel cells according to Claim 8, wherein the desired molar flow rates of hydrogen at the anode inlet and the anode outlet of the cell stack are calculated by:

$$nt_{in_{req}}^{H_2} = \frac{I_{stack} * N_{cell} * \alpha}{96485 * 2}$$

$$nt_{out_{req}}^{H_2} = \frac{I_{stack} * N_{cell} * (\alpha - 1)}{96485 * 2}$$

where, $nt_{in_{req}}^{H_2}$ and $nt_{out_{req}}^{H_2}$ are the desired molar flow rates of hydrogen at the anode inlet and the anode outlet of the cell stack, $I_{stack}$ and $N_{cell}$ are a current of the cell stack and a number of cells of the cell stack, and $\alpha$ is a desired excess coefficient under a current working condition;
calculating a desired amount of hydrogen in moles in the anode circulation cavity of the hydrogen circulation system according to the desired molar flow rates of hydrogen at the anode inlet and the anode outlet of the cell stack comprises:

according to $nt_{out_{req}}^{H_2}$, calculating $nt_{out_{req}}^{H_2O}$ and $nt_{out_{req}}^{N_2}$:

$$\frac{nt_{out}^{H_2}}{nt_{out}^{H_2} + nt_{out}^{N_2} + nt_{out}^{H_2O}} = \frac{nt_{out_{req}}^{H_2}}{nt_{out_{req}}^{H_2} + nt_{out_{req}}^{N_2} + nt_{out_{req}}^{H_2O}}$$

$$nt_{out}^{H_2O} \cdot M_{H_2O} + nt_{out}^{N_2} \cdot M_{N_2} + nt_{out}^{H_2} \cdot M_{H_2}$$

$$= nt_{out_{req}}^{H_2O} \cdot M_{H_2O} + nt_{out_{req}}^{N_2} \cdot M_{N_2} + nt_{out_{req}}^{H_2} \cdot M_{H_2}$$

according to $nt_{in_{req}}^{H_2}, nt_{out_{req}}^{H_2}, nt_{out_{req}}^{H_2O}$ and $nt_{out_{req}}^{N_2}$, calculating a desired amount of hydrogen in moles in the first cavity, a desired amount of hydrogen in moles in the second cavity and a desired amount of hydrogen in moles in the third cavity;

calculating the desired amount of hydrogen in moles in the anode circulation cavity of the hydrogen circulation system according to the desired amount of hydrogen in moles in the first cavity, the desired amount of hydrogen in moles in the second cavity and the desired amount of hydrogen in moles in the third cavity:

$$n_{total_{req}}^{H_2} = n_{1_{req}}^{H_2} + n_{2_{req}}^{H_2} + n_{3_{req}}^{H_2}$$

where, $n_{1_{req}}^{H_2}, n_{2_{req}}^{H_2}$ and $n_{3_{req}}^{H_2}$ are the desired amount of hydrogen in moles in the first cavity, the desired amount of hydrogen in moles in the second cavity and the desired amount of hydrogen in moles in the third cavity.

10. The nitrogen discharge control method for a hydrogen circulation system for high-power fuel cells according to Claim 9, wherein calculating a number of times of turn-on of the nitrogen discharge valve according to the hydrogen deficiency and the single on-off time comprises:

taking the hydrogen deficiency as a desired nitrogen discharge, constructing a ratio $\mu$ of total nitrogen discharge to the desired nitrogen discharge after the nitrogen discharge valve is turned on $K$ times:

$$\mu = \frac{\left| dn_{N_2}^1 + dn_{N_2}^2 + \cdots + dn_{N_2}^K - dn_{N_2} - dn_{N_2}^{diff} \right|}{dn_{N_2}}$$

where, $dn_{N_2}$ is the desired nitrogen discharge:

$$dn_{N_2} = n_{total_{req}}^{H_2} - n_{total}^{H_2}$$

$dn_{N_2}^{diff}$ is a quantity of nitrogen diffused from a cathode to the anode of the cell stack:

$$dn_{N_2}^{diff} = D_{N_2} * K * (d_t + d_s + d_e)$$

where, $d_t$, $d_s$ and $d_e$ are respectively an on-state duration, a turn-on time and a tun-off time of the nitrogen discharge valve; $D_{N_2}$ is a nitrogen diffusion rate;

$dn_{N_2}^k$ is a nitrogen discharge when the nitrogen discharge valve is turned on for a $k^{th}$ time:

$$dn_{N_2}^k = \frac{Q * P_{out}}{101.325} * \frac{273.15}{(T_{out} + 273.15) * 22.4} * fr_{N_2}^k, k = 1,2,3 \cdots K$$

where, $Q$ is a quantity of nitrogen discharged every time the nitrogen discharge valve is turned on:

$$Q = Q_t * d_t$$

where, $Q_t$ is a choked flow of the nitrogen discharger valve:

$$Q_t = C_v * C_q * P_{out}/T_{out}^{0.5}/\rho_{out}$$

where, $C_v$ is a flow coefficient, and $C_q$ is a flow parameter;

$fr_{N_2}^k$ is a nitrogen discharge proportion when the nitrogen discharge valve is turned on for the $k^{th}$ time:

$$fr_{N_2}^k = \frac{nt_{out}^{H_2.k}}{nt_{out}^{H_2.k} + nt_{out}^{N_2.k} + nt_{out}^{H_2O.k}}$$

where, $nt_{out}^{H_2.k}, nt_{out}^{N_2.k}$ and $nt_{out}^{H_2O.k}$ are molar flow rates of hydrogen $H_2$, nitrogen $N_2$ and water vapor $H_2O$ of the anode outlet of the cell stack when the nitrogen discharge valve is turned for the $k^{th}$ time:

$$nt_{out}^{H_2.k} = dn_{N_2}^{k-1} + nt_{out}^{H_2.k-1}$$

$$nt_{out}^{N_2.k} = nt_{out}^{H_2.k-1} - dn_{N_2}^{k-1}$$

$$nt_{out}^{H_2O.k} = nt_{out}^{H_2O.k-1}$$

setting the ratio $\mu$ of the total nitrogen discharge to the desired nitrogen discharge to a preset ratio threshold $\mu_0$ to solve the number $K$ of times.

FIG. 1

Acquire a cell stack flow resistance of the cell stack and an entrainment ratio of the single ejector, and calculate molar flow rates of gases at the anode inlet and the anode outlet of the cell stack according to the cell stack flow resistance and the entrainment ratio

Calculate an amount of hydrogen in moles in an anode circulation cavity of the hydrogen circulation system according to the molar flow rates of gases at the anode inlet and the anode outlet of the cell stack

Acquire a desired excess coefficient of hydrogen of the cell stack, and calculate desired molar flow rates of hydrogen at the anode inlet and the anode outlet of the cell stack according to the desired excess coefficient of hydrogen

Calculate a desired amount of hydrogen in moles in the anode circulation cavity of the hydrogen circulation system according to the desired molar flow rates of hydrogen at the anode inlet and the anode outlet of the cell stack

Calculate a hydrogen deficiency of the cell stack according to the amount of hydrogen in moles and the desired amount of hydrogen in moles in the anode circulation cavity of the hydrogen circulation system

Acquire a single on-off time of the nitrogen discharge valve, calculate a number of times of turn-on of the nitrogen discharge valve according to the hydrogen deficiency and the single on-off time, and perform nitrogen discharge control according to the number of times of turn-on

FIG. 2

Europäisches
Patentamt

European
Patent Office

Office européen
des brevets

# EUROPEAN SEARCH REPORT

**Application Number**

EP 24 17 8488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/271824 A1 (CUMMINS INC [US]; HYDROGENICS CORP [CA]) 29 December 2022 (2022-12-29) * the whole document * | 1-10 | INV. H01M8/04089 H01M8/04119 H01M8/0438 H01M8/04746 |
| A | US 2003/217773 A1 (YAMADA TOMOJI [JP] ET AL) 27 November 2003 (2003-11-27) * the whole document * | 1-10 | H01M8/04791 H01M8/04992 |
| A | WO 2023/036569 A1 (BOSCH GMBH ROBERT [DE]) 16 March 2023 (2023-03-16) * Fig.2 and description thereof * | 1-10 | |
| A | US 2009/280373 A1 (BAASER BERNHARD [US] ET AL) 12 November 2009 (2009-11-12) * paragraph [0035]; figure 1 * | 6-10 | |

**TECHNICAL FIELDS SEARCHED (IPC)**

H01M

The present search report has been drawn up for all claims

| Place of search | Date of completion of the search | Examiner |
|---|---|---|
| Munich | 4 November 2024 | Schmidtbauer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 8488

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2024

| Patent document cited in search report | Publication date | Patent family member(s) | | Publication date |
|---|---|---|---|---|
| WO 2022271824 A1 | 29-12-2022 | NONE | | |
| US 2003217773 A1 | 27-11-2003 | DE | 10322967 A1 | 05-02-2004 |
| | | JP | 2003338302 A | 28-11-2003 |
| | | US | 2003217773 A1 | 27-11-2003 |
| WO 2023036569 A1 | 16-03-2023 | EP | 4402736 A1 | 24-07-2024 |
| | | KR | 20240055079 A | 26-04-2024 |
| | | US | 2024363876 A1 | 31-10-2024 |
| | | WO | 2023036569 A1 | 16-03-2023 |
| US 2009280373 A1 | 12-11-2009 | CN | 101599547 A | 09-12-2009 |
| | | DE | 102009019838 A1 | 17-12-2009 |
| | | US | 2009280373 A1 | 12-11-2009 |

EPO FORM P0459

For more details about this annex : see Official Journal of the European Patent Office, No. 12/82